# EUROPEAN PATENT APPLICATION

(11) **EP 3 372 066 A1**
(43) Date of publication of application: **12.09.2018**
(21) Application number: 18159891.3
(22) Date of filing: 05.03.2018
(51) Int. Cl.: A01F 25/00, A23B 7/144, F25D 23/06

(54) **INFLATABLE AIR BAG FOR CLOSING OFF PASSAGES WHEN STORING PLANTS IN BOXES**

(30) Priority: 06.03.2017 NL 2018473
(71) Applicant: Mooij Agro B.V., 5963 AC Hegelsom (NL)
(72) Inventor: MOOIJ, Maarten, 3481 EH HARMELEN (NL)
(74) Representative: Algemeen Octrooi- en Merkenbureau B.V.

(57) **Abstract**

The present invention relates to an inflatable air bag for closing off passages when storing plants in boxes for the purpose of ventilating the plants in the boxes during (prolonged) box storage, in which the air bag is configured to close off a passage between two rows of stacked boxes in a vertical direction at least substantially against air displacement, in which the air bag is provided with an air supply connection for supplying a gaseous medium for inflating the air bag during use. According to a first aspect of the present invention, the air bag is characterized by the fact that the air bag is configured to, in use, increase in length between the rows of stacked boxes from the ground in a vertical direction and in which the air bag is furthermore provided with a forcing member which is attached on the inside of the air bag to the first free end and is configured to cause the air bag to roll up inwards when the air pressure in the air bag decreases.

## Description

The present invention relates to an inflatable air bag for closing off passages when storing plants in boxes.

Following the harvest, agricultural products and in particular plants, such as potatoes, onions, carrots, cabbage and other tuberous and bulbous plants, are often stored for short or prolonged periods in large storage spaces, such as large storehouses or cold stores. Fruit and vegetables are often stored in boxes in order to dry, cool, warm or ripen quickly.

There are various kinds of storage systems which can roughly be divided into three different types: bulk storage, box storage and bagged storage. In the case of bulk storage, the plants are stored in the storage space as a large batch. This form of storage is highly suitable for storing large batches of plants for a prolonged period and is the most efficient in terms of floor space, since there is hardly any loss of space as is the case with bagged storage and box storage. However, the drawback of such bulk storage is the fact that ventilation of the plants is not simple and that it is difficult to achieve adequate and even ventilation througwood the entire batch. In the case of bagged storage, the plants are immediately placed in bags after having been harvested and these bags are then transported to their storage space where the bags may be stored for a short period or prolonged period of time. A drawback of bagged storage compared to is the fact that ventilation is more difficult.

In the case of box storage, the plants are stored in separate boxes and the boxes are stacked in the storage space. In order to improve the ventilation, the boxes are often stacked in rows, with passages being left clear between two rows of passages for the sake of ventilating the plants. An air stream may be forced through the passages and by either pulling/pushing air through the box, depending on the ventilation device or actuation, a negative pressure or a positive pressure is achieved.

As the storage space is not always entirely filled with boxes with plants, it is not efficient to ventilate the entire space. At present, it is known to use protective passage covers or passage tarpaulins in order to achieve a more efficient, purposeful ventilation. These cover the horizontal and vertical passages along the contours of the plurality of stacks of boxes, so that the ventilation only takes place within this reduced area. In this case, the horizontal covers are used to close off the space, i.e. the passage between two rows of (stacked) boxes on the top side and the vertical covers are used to close off the space, i.e. also the passage, at the end of the rows of (stacked) boxes on the end side vertically. This head end closure is often situated on the side opposite to the side where the ventilator(s) is/are located and the air is blown into the passages or is sucked out of the passages.

Although the covers produce a significantly improved air stream/ventilation, the use of such covers is associated with drawbacks. Thus, fitting, removing and modifying the covers is labour-intensive. The covers have to be laid or unrolled and rolled up by hand. Because the boxes are often stacked high, for example 3 boxes high up to 3.75 metres or up to a height of 7.5 metres and more. Therefore, it is often undesirable to have to fit, modify or remove the covers by hand at such heights. In addition, this may only be carried out by several individuals together, in which case one individual for example drives a forklift truck which takes a second individual to the required height in order to fit, modify or remove the vertical and horizontal covers.

Nowadays, it is known to replace the covers by inflatable air bags. They actually have the same function as the covers, namely closing off the passages, both in the horizontal and vertical direction. The horizontal air bags are for example attached to the ceiling or to the wall(s) of the storage space by means of fastening means provided for the purpose. The vertical air bags may also be attached to the ceiling or to the horizontal air bags or boxes or to other features provided for the purpose and extend as far as the floor area.

The boxes with plants are not placed in the storehouse all at once, but rather over a certain period of time. During this so-called storing period, only a part of the storehouse is filled and the rows are not complete. The rows are then made increasingly longer. The boxes with plants are often removed from the storage space in parts during the storage season, depending on the buying requirements/sales thereof, but the reason for this may also be that the plants still have to undergo a treatment, for example because they have to be washed or sorted. In that case, for example, an x number of boxes is taken from the storage space, resulting in the rows of stacked boxes becoming shorter. During the removal of the boxes, the horizontal air bags may remain in place, but the vertical air bags will usually have to be removed and have to be re-installed in a new position after the removal of the boxes in order to achieve a vertical closure again for the remainder of the stacked boxes. In that case, two individuals have to be present again in order to remove the vertical air bag at an elevated level and attach it to the ceiling or the horizontal air bag or boxes or another fastening means which is present at the new location.

It is an object of the present invention to provide an improved inflatable air bag for closing off passages when storing plants in boxes, in which at least some of the abovementioned prior-art drawbacks are solved.

It is a further object of the present invention to provide an improved inflatable air bag for closing off of passages when storing plants in boxes, in which the air bag can easily be fitted, removed and modified, and in a less labour-intensive way than is the case with the currently known inflatable air bags.

It is yet a further object of the present invention to provide an improved inflatable vertical air bag for closing off passages when storing plants in boxes, in which the air bag can easily be fitted, removed and modified, and in which the risk of damage to the air bag during fitting, removal or modification is reduced.

According to a first aspect of the present invention, said object is achieved by an inflatable air bag for vertical closure of passages between pluralities of stacked boxes for ventilating plants in the boxes during a short period or prolonged period of box storage, in which the air bag is configured to close off a passage between two rows of stacked boxes in a vertical direction at least substantially against air displacement, in which the air bag is provided with an air supply connection for supplying a gaseous medium for inflating the air bag during use.

According to a first aspect of the present invention, the air bag is characterized by the fact that the air bag is configured to, in use, increase in length between the rows of stacked boxes from the ground in a vertical direction and in which the air bag is furthermore provided with a forcing member which is attached on the inside of the air bag to the first free end, i.e. the end which, in use, is at the top, and is configured to cause the air bag to roll up inwards when the air pressure in the air bag decreases.

As has already been said, such inflatable air bags are used for horizontal and vertical closure of the passages between boxes with plants. The boxes are often stacked in rows at the storage location with space being left in between the rows. This free space is formed by the passages which are used for ventilation. The dimensions of these passages are often determined beforehand and configured, on the one hand, to allow sufficient ventilation between the rows to the boxes and, on the other hand, adapted in size to the dimensions of a cover or air bag with which the end side and top side of the passage can be closed off. Often, the underside of the passage is closed off by the floor on which the boxes are placed, and the rear side of the passage by a pressure chamber, negative pressure chamber or ventilator (wall) or collection of ventilators. The side walls of the passage are formed by the rows of boxes and the top side and front side (end side) have to be closed off in order to force the circulation of air through the boxes. The top side of the passage or the passages is closed off by a horizontal air bag and the end side by a vertical air bag.

Because the boxes are often stacked to a height of 3.75 metres or 5, 6.25 or 7.5 metres or even higher, the air bags have to vertically close off the passage to a sufficient degree up to this length. The air bag is thus configured to be fitted or installed in a first, non-inflated, or at least substantially non-inflated, state. Fitting the currently known vertical air bags is performed by attaching the air bags to the ceiling, or to a member which is configured for the purpose and is situated near the level of the stacked boxes (up to 7.5 metres or more). After the air bags have been attached, they can be brought to a second, inflated operating state. To this end, the air bags are provided with an air supply connection. By means of this air supply connection, a gaseous medium can be introduced in the air bag. This is preferably air, but this may also be a different medium, such as carbon dioxide or the like. The person skilled in the art will understand which other medium may be suitable.

In contrast to the currently known air bags, the air bag according to a first aspect of the invention is configured to be fitted witwood first having to be attached to the ceiling or the like at an elevated level. The reason for this is that the air bag according to an aspect of the invention is configured to increase in length, as a result of which the air bag can be placed in the correct position on the floor in a first, non-inflated state, after which the air bag can be inflated, as a result of which its volume increases. This increase in volume reveals itself, on the one hand, by the fact that the elongate air bag becomes thicker and is thus configured to allow the cross section of the air bag to increase when it is being inflated. On the other hand, the air bag is configured to allow the length of the air bag to increase when the air bag is being inflated. If the air bag is placed on the floor area in the correct position on the end side of the rows near the end of the passage on the opposite side of the air supply/discharge in the non-inflated state and the gaseous medium is then blown into the air bag, the air bag will rise and increase in length from the ground until the final maximum length is reached and the entire passage is closed off by the air bag. In this way, such an air bag is not only easier, less laborious or labour-intensive, but the positioning, removal or displacement may also be performed by an individual from the ground. With such air bags, no arrangements need to be made for hanging them, either. Fastening hooks on the ceiling of the storage location or a special fastening system provided for the purpose are superfluous, which renders the air bag according to an aspect of the invention significantly easier.

It is furthermore characteristic of the air bag according to an aspect of the invention that friction occurs between the air bag and the boxes when deflating the air bag. Many of the boxes used, in particular in the case of plants, such as onions and potatoes, are made of wood. The air bag is made of plastic, often polyether, polypropylene, and preferably polyethylene or the like. However, the wall thickness of the air bag is often not able to withstand the friction with the wooden boxes. A small splinter, nail or screw or another projection or rough surface of the box may suffice to penetrate the wall of the air bag and puncture the air bag. As, in many cases, the vertical air bags have to be moved often during the storage season, such air bags are subject to wear. However, the air bag according to an aspect of the invention is characterized by the fact that the air bag is provided with a forcing member. This forcing member is attached on the inside of the air bag to the first free end of the air bag. That is to say that, in the inflated state, the air bag is elongate and comprises two free ends. One free end adjoins the floor area or the plate on which/to which the air bag is fitted and the other free end extends up to the height of the stack of boxes and preferably up to the horizontal air bag. Preferably, this free end is formed in such a way that it follows the shape of the horizontal air bag, for example because it is U-shaped at the end, which ensures an at least substantially seamless, substantially airtight abutment. However, the air bag may also be provided with a flat free end or another reliably abutting end which is, for example, V-shaped.

The forcing member is so to speak attached on the inside of the air bag to at least one of the free ends, i.e. that end which is configured to abut the horizontal air bag on the top side of the passage in the inflated state. Preferably, the forcing member is also attached on the inside of the air bag to the other free end which is situated on or near the ground. The forcing member ensures that a prestress is exerted on the upper free end and tries to pull this free end downward. Due to the fact that the forcing member is attached on the inside of the air bag, the air bag will roll up inwards as a result of the forcing member. However, because the air bag is pressurized and the forcing member comprises a prepressure which makes the air bag roll up inwards, but which is smaller than the pressure which is supplied by the inflation of the air bag, as a result of which the air bag unrolls from the inside while rising up, the air bag will overcome the force of the forcing member when it is pressurized and brought from a non-inflated state to an inflated state and the air bag will unroll from inside, and the air bag will no longer overcome the force of the forcing member when the pressure decreases from an inflated state to a non-inflated state, as a result of which the free upper end of the air bag is pulled inwards and downwards, resulting in the air bag rolling up from the outside in and no, or at least substantially virtually no, friction is produced between the outside of the air bag and the boxes.

In a simple embodiment, the forcing member may be configured as a weight. In this case, the weight is attached on the inside on the free upper end of the air bag and is a weight which ensures that the air bag can take up its maximum volume in a nominal inflated state of the air bag. This is preferably a pressure of 1.5 bar, 2, 4, 5, 7 or 10 or more bar.

In a further example of the invention, the forcing member is a spring balance which is attached on the inside between the two free ends of the air bag.

In another example of the invention, the forcing member is a weight which is attached to a first free end on the inside of the air bag.

The forcing member may be in the form of a weight, but is preferably a spring balance. Spring balances or return springs are construction elements which ensure that a counterforce is produced which either increases (linearly or logarithmically) upon displacement (extension) or in which the counterforce remains the same independently from the displacement. The spring balance is thus functional as an accumulator of energy. The spring balance may be in the form of a balance which comprises a coil spring in which the coil is subjected to flexural loads and, depending on the flexural loads, the material and the turns, a certain force and extension may be achieved.

The spring balance ensures that the upward forces (resulting from inflating the air bag) and downward forces (resulting from the spring balance and gravity) can be mutually balanced. These are preferably adapted to each other such that, in the inflated operating state, the upward force overcomes the downward force and preferably to a sufficient degree. In order to adjust this well, the spring balance is preferably a spring balance with an adjustable spring force. This may, for example, be a spring balance, such as is present for carrying heavy tools, provided that such a spring balance is known to be used for supplying an upward force in order to (partly) cancel the force of gravity of heavy tools, with such a spring balance in the present invention being used to counteract an upward force by producing a downward force.

The spring balance is preferably provided with a cable which can be rolled up/unrolled and which is, for example, a steel cable. On the free end, this cable is provided with a fastening means, such as a (snap) hook. The snap hook may be attached on the inside of the air bag to the free end, with the housing of the spring balance being attached to the other side on the inside of the air bag, or vice versa. This spring balance may also be fitted to the plate on which the air bag is fitted. When the air pressure in the air bag descreases and the upward pressure becomes insufficient to overcome the downward force, the spring balance will roll up the air bag from the outside in or roll it up. Thus, there will be no friction between the delicate outer side of the air bag and the boxes and wear will be reduced significantly and thus also the risk of the air bag being torn or punctured by a splinter, nail, screw or the like.

In a further example of the invention, the forcing member is a rubber band which is attached on the inside between the two free ends of the air bag.

The forcing member may also be in the form of a rubber band, which has the advantage that the costs and complexity of such an embodiment are low. The properties of the rubber band determine the final force which the member exerts on the air bag and, depending on the requirements, a rubber band of reduced or greater elasticity may be used. The difference between the use of a rubber band compared to a spring balance is that the counterforce of the rubber band increases upon extension and is not adjustable. By contrast, the spring balance may be preferred over the rubber band due to the constant counterforce and adjustability thereof.

In a further example of the invention, the forcing member is a spring which is attached on the inside between the two free ends of the air bag.

An embodiment of the forcing member in the form of a spring has the advantage that it is also simple with regard to complexity and low in costs.

In a further example of the invention, the air bag furthermore comprises an air-discharge valve via which the gaseous medium can be removed from the air bag.

The air supply connection or the air supply valve or air supply coupling may be configured as a closable connection. The effect thereof is that the connection may be connected to an air hose and may thus be brought to an inflated operating state, after which the air hose can be removed. Alternatively, the hose may also remain attached and the pressure of the air bag may be maintained in this way. However, in an example the air bag is provided with a pressure sensor, with the air supply connection allowing air into the air bag as soon as the sensor detects that the air pressure drops below a certain minimum limit.

If the air hose is no longer connected in the operating state, the shutoff or non-return valve ensures that the air bag does not deflate in an undesirable way and maintains its volume. However, if the air hose has to be brought to a non-inflated state, the air supply connection or the non-return valve thereof can be opened without the air hose being fitted. The air bag will then (slowly) deflate. In order to further or accelerate this process, the air bag may be provided with a separate air-discharge valve, or the air hose on the air supply connection may be configured to also draw in air, as a result of which the air bag may be actively deflated or sucked empty. To this end, the air bag is preferably provided with an integrated air supply/discharge connection or an integrated air-discharge valve and air supply connection or a vacuum valve.

In a further example of the invention, the first free end of the air bag is at least substantially flat or U-shaped or may be of a different design for the purpose a conformable connection to a vertical air bag.

The air bag according to an aspect of the invention which is provided with a forcing member is suitable for vertical closure of the passages. Because this closure is achieved on the one side by connecting the air bag with the ground, this end side is preferably at least substantially flat. The other side is also substantially flat, but preferably flat or U-shaped or of a different design, as a result of which the vertical air bag, in the operating state, adjoins and follows the shape of the wall of the horizontal air bag.

The invention will now be explained in more detail with reference to a drawing, in which drawing:
Fig. 1 shows a diagrammatic embodiment of the layout of a storage location with rows of boxes for the purpose of storing plants for a (prolonged or) short period of time;
Fig. 2 shows a diagrammatic embodiment of the layout of a storage location with rows of boxes for the purpose of storing plants for a (prolonged) period of time with fitted air bags for closing off the passages between the boxes;
Fig. 3 shows a diagrammatic embodiment of an inflatable air bag for vertical closure of the passages between the boxes according to a first aspect of the invention.

To improve understanding of the invention, components shown in the different figures which are identical are denoted by the same reference numerals in the following description of the figures.

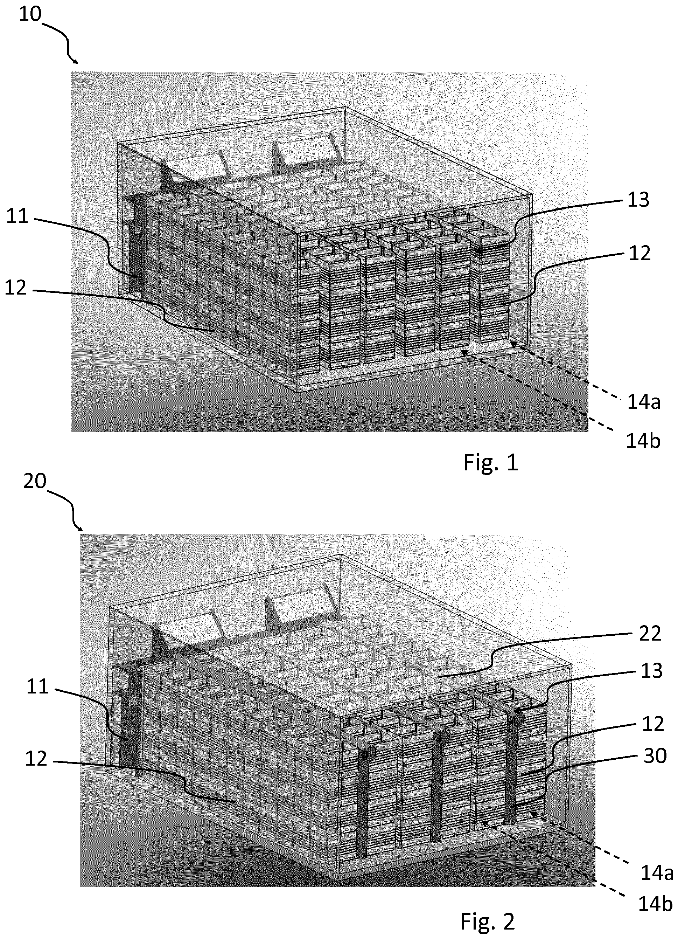

Fig. 1 shows an arrangement of a plurality of boxes which are arranged in rows for the purpose of storing plants for a prolonged or short period of time;

Fig. 2 shows an identical arrangement of a plurality of boxes in which the passages between the boxes are closed off by horizontal and vertical air bags;

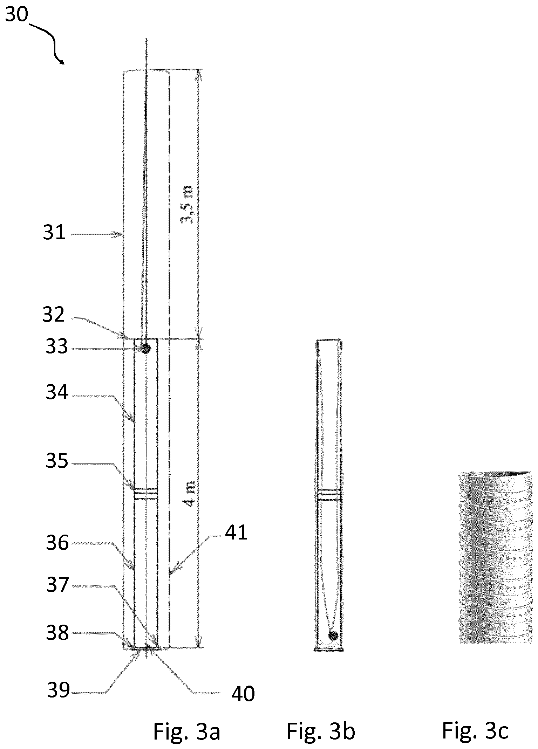

Fig. 3a shows a cross section of an air bag according to a first aspect of the invention, with the air bag being in an inflated state;

Fig. 3b shows the same air bag which is in a deflated state;

Fig. 3c shows a tube section which can be used in a bottom part of the air bag according to the invention.

Fig. 1 shows a perspective view of a storage location where agricultural products, and in particular plants such as potatoes, onions, carrots, cabbages and other tuberous and bulbous plants, are stored, often after harvest, for a short or prolonged period of time. This storage location may be a large storage space, such as a large storehouse or cold store.

With the box storage 10 shown in Fig. 1, the plants are stored in separate boxes and the boxes are stored in the storage space in a stacked manner. For the purpose of improving the ventilation, the boxes 12 are often stacked in rows 14a, 14b, in which case passages 13 are left clear between two rows 14a, 14b for the purpose of ventilating the plants. An air stream may be forced through the passages 13 by either pulling/pushing air through the box, depending on the ventilation device 11 or actuation, a negative pressure or positive pressure is achieved.

Because the storage space 10 is not always entirely filled with boxes 12 with plant(s), it is not efficient to ventilate the entire space. It is currently known to use protective covers, tarpaulins or air bags for passages to make ventilation more efficient and purposeful. Fig. 2 shows such horizontal air bags 22 for closing off the top side of the passage 13, and vertical air bags 30 for closing off the front side of the passage 13. These air bags 22, 30 are configured to close off horizontal and vertical passages 13 along the contours of the plurality of stacks of boxes 12, so that ventilation only takes place inside this reduced area. In this case, the horizontal air bags 22 are used to close off the space, i.e. the passage 13 between two rows 14a, 14b of (stacked) boxes 12 along the top side and the vertical covers are used to close off the space, i.e. also the passage 13, at the end of the rows 14a, 14b of (stacked) boxes 12 on the end side vertically. This head end closure is often situated on the opposite side of the side where the ventilator(s) 11 is/are fitted and the air is blown into the passages or is sucked out of the passages.

Often, placing the boxes 12 with plants in the storehouse is not performed in one go, but rather over a certain period of time. During this so-called storing period, only a part of the storehouse 10 is filled and the rows 14a, 14b are not complete. The rows 14a, 14b are then made increasingly longer. In addition, the boxes 12 with plants are often removed from the storage space in parts during the storage season. During the removal of the boxes, the horizontal air bags 22 may remain in place, but the vertical air bags 30 will usually have to be removed and have to be re-installed in a new position after the removal of the boxes in order to achieve a vertical closure again for the remaining stacked boxes 12. This is a time-consuming task which often requires two or more individuals.

According to an aspect of the invention, Fig. 3a shows an improved air bag 30 which may be used for vertical closure of the passages 13, as illustrated in Figs. 1 and 2. The air bag 30 is configured to close off a passage 13 between two rows 14a, 14b of stacked boxes 12 in the vertical direction at least substantially for air displacement, in which the air bag is provided with an air supply connection 41 for supplying a gaseous medium for the purpose of inflating the air bag 30 into an inflated state (as shown in Fig. 3a) during use. The air bag 30 consists of two segments, a top part of 3.5 metres and a bottom part of 4 metres. However, it will be clear to those skilled in the art that these are only examples, obviously, different numbers of segments and lengths may also be used. The upper part of the air bag 31 consists of a flexible plastic fabric, such as PVC. However, it will be clear that other materials may also be used, such as polyether, polypropylene or polyethylene. In addition to the air bag, the bottom section also comprises an interior part. This interior part is, for example, a tube part, such as that shown in Fig. 3c. Such a tube part preferably has a length which corresponds to a part of the bottom part of the air bag 30. Thus, the air bag may be made from, for example, two tube segments 34, 36 of 2 metres each, by which the two segments may be attached to each other on a connecting piece or coupling piece 35. The tube preferably has a diameter which is significantly smaller than the width of passage 13, for example if the passage is 500mm wide, the tube is for example 300mm. As has already been mentioned, the length of each segment is for example 2000mm or may be a different dimension. On the underside, the tube is configured to be connected to a bottom plate 39 of wood, metal or plastic in order to be positioned on the floor of the storehouse. To this end, the tube is for example provided with a flange part 38 and saddle piece 37.

The air bag is characterized by the fact that, in contrast to currently known air bags, the air bag 30 is provided with a forcing member 33 which is configured to make the top part 31 of the air bag be rolled up inwardly when reducing the air pressure in the bag, as is also shown in Fig. 3b. In the operating state, the air bag 30 is inflated and both the rigid bottom segment or segments 34, 36 and also the flexible upper segment 31 of the air bag 30 have a maximum length, in this example 7.5 metres. The air pressure in the air bag is such that it ensures that in particular the upper piece remains erect and adjoins the horizontal air bag. The forcing member, which may be a weight, but may also be a spring construction or a spring balance, is attached in the air bag in such a way that it exerts a force which pulls the upper free end of the air bag down and in particular inwards into the tube part or the tube parts of the bottom segment. To this end, the spring balance is preferably attached either at the bottom of the air bag, near the bottom plate 39, or somewhere between the transition 32 from the upper to the bottom part and the bottom plate. The free end of the cable or the rope of the spring balance is attached at the top, i.e. the inside of the upper free end of the upper segment 31 of the air bag. Alternatively, the spring balance may also be attached to the bottom plate and may be attached again to a hook 33 at the top in the upper tube segment 34 via the inside of the upper free end of the upper segment 31. As soon as the air pressure in the air bag 30 decreases, the downward force of the spring balance, the weight, spring construction and the like will overcome the upward force resulting from inflating and maintaining the pressure of the air bag and ensure that the upper part 31 of the air bag 30 will roll up inwards into the tube segments. As a result thereof, the outside of the air bag will no longer scrape against the boxes and damage to the air bag is prevented and simple installation, removal and displacement of such vertical air bags is achieved.

It will be clear to those skilled in the art that the illustrated embodiments, aspects and examples and the examples shown in the figures only describe and show one of the many forms in which the invention is used. Thus, the invention is not limited to such examples, but the scope of protection of the invention is expressly determined by the attached claims.

## Claims

1. Inflatable air bag for vertical closure of passages between pluralities of stacked boxes for ventilating plants in the boxes during a short period or prolonged period of box storage, in which the air bag is configured to close off a passage between two rows of stacked boxes in a vertical direction at least substantially against air displacement, in which the air bag is provided with an air supply connection for supplying a gaseous medium for inflating the air bag during use, **characterized in that** the air bag is configured to, in use, increase in length between the rows of stacked boxes from the ground in a vertical direction and in which the air bag is furthermore provided with a forcing member which is attached on the inside of the air bag to the first free end and is configured to cause the air bag to roll up inwards when the air pressure in the air bag decreases.

2. Inflatable air bag according to Claim 1, in which the forcing member is a spring balance which is attached on the inside between the two free ends of the air bag.

3. Inflatable air bag according to Claim 2, in which the spring balance is a spring balance with adjustable spring force.

4. Inflatable air bag according to Claim 1, in which the forcing member is a weight which is attached to a first free end on the inside of the air bag.

5. Inflatable air bag according to Claim 1, in which the forcing member is a rubber band which is attached on the inside between the two free ends of the air bag.

6. Inflatable air bag according to Claim 1, in which the forcing member is a spring which is attached on the inside between the two free ends of the air bag.

7. Inflatable air bag according to one of the preceding claims, in which the air bag furthermore comprises an air-discharge valve via which the gaseous medium can be removed from the air bag.

8. Inflatable air bag according to Claim 7, in which the air-discharge valve and the air supply connection are integrated.

9. Inflatable air bag according to one of the preceding claims, in which the first free end of the air bag at least substantially has a shape from the group consisting of: planar, U-shaped, V-shaped or a different design, for the purpose of a conforming connection to a vertical air bag.
